# EUROPEAN PATENT APPLICATION

(11) **EP 4 414 159 A1**
(43) Date of publication of application: **14.08.2024**
(21) Application number: 23156281.0
(22) Date of filing: 13.02.2023
(51) Int. Cl.: B29C 70/46, B29C 33/34, B29C 35/08, B29C 43/52, B29C 45/14, B29C 51/08, B29C 51/14, B29C 51/42, B29C 70/48, B29C 70/54, B29C 37/00, B29C 43/14, B29C 69/00, B29C 70/18, B29K 311/10, B29K 311/12

(54) **A METHOD FOR PRODUCING A COMPOSITE LIGHTWEIGHT CONSTRUCTION**

(71) Applicant: Cisma Solutions ApS, 8600 Silkeborg (DK)
(72) Inventor: LAURSEN, Søren Kroun, 6040 Egtved (DK); SASS-PETERSEN, Martin, 8600 Silkeborg (DK)
(74) Representative: Zacco Denmark A/S

(57) **Abstract**

A method for producing a composite lightweight construction (7) from a plane sheet (11) of a pre-preg fibre composite material is disclosed, which method comprises the steps of cutting out a piece (12) of the sheet (11) of pre-preg fibre composite material, which piece (12) has a predetermined size and shape depending on the composite lightweight construction (7) to be produced, heating the cut-out piece (12) to a temperature, at which the pre-preg fibre composite material is formable, forming the composite lightweight construction (7) by pressing the heated piece (12) into a desired three-dimensional shape, and actively cooling the formed composite lightweight construction (7) to a temperature, at which the pre-preg fibre composite material is form-stable. Furthermore, a formed composite lightweight construction (7), such as a vehicle outer surface component (2-6) configured to be attached in exterior arrangement to a vehicle (1) to withstand climate exposure, such as rain, snow, wind and/or sunlight, which composite lightweight construction (7) is produced using such a method is disclosed.

## Description

### Technical Field

The present invention relates to a method for producing a composite lightweight construction from a plane sheet of a pre-preg fibre composite material.

### Background art

Biodegradable plastics are plastics that can be decomposed by the action of living organisms, usually microbes, into water, carbon dioxide, and biomass. Biodegradable plastics are commonly produced with renewable raw materials, microorganisms, petrochemicals, or combinations of all three. While the words "bioplastic" and "biodegradable plastic" are similar, they are not synonymous. Not all bioplastics (plastics derived partly or entirely from biomass) are biodegradable, and some biodegradable plastics are fully petroleum based. As more companies are keen to be seen as having "Green" credentials, solutions such as using bioplastics are being investigated and implemented more.

However, many sceptics believe that bioplastics will not solve problems others expect. Many believe that biodegradable plastics (including compostable) cannot and must never be seen as a 100% replacement to traditional plastics, and reduction must come first. The reusable option must always be considered first, if suitable to the specific operational conditions.

Biodegradable plastics can therefore at present, e.g., be considered for the use in making compostable bags to optimise separate collection of organics, compostable tableware if and when reusable is not an option, disaster relief operations, coffee capsules and tea bags, absorbent hygiene products, etc. However, biodegradable plastics are at present not recommended for producing or replacing products, which are exposed to the climate.

Hence, in the above view of finding sustainable materials and environmental protection, there is a general need for materials that are based on renewable resources such as plant material and materials that can be discarded in an environmentally friendly manner. Furthermore, through the last decades, the use of composite materials has grown significantly due to their high strength to weight ratio. Composite materials consist of at least two macroscopically different phases, commonly a fibrous material (a fibrous reinforcement) embedded in an organic polymer matrix. The fibrous reinforcement is commonly glass, carbon or aramid, but recently bio-based fibres such as hemp have become commercially available. The polymer matrix is in most cases epoxy, polyester, vinyl ester or polyurethane, which are all based on crude oil and non-biodegradable and in most cases non-recyclable.

Due to the commercial availability of bio-based fibres, composite materials with a sustainable reinforcement can be obtained whereas most available matrix materials are unsustainable. In addition to being non-biodegradable and only partly sustainable, composite materials made from a biological fibre and an oil-based polymer matrix has the drawback of a poor compatibility between the reinforcement and matrix due to differences in polarity and chemical groups between the fibres and the matrix. The poor compatibility has a negative impact on the mechanical properties of the composite material.

Composite materials have developed greatly since they were first introduced. However, before composite materials can be used as an alternative to conventional materials as part of a sustainable environment a number of needs remain. Among others are the need for availability of standardized durability characterization data for fibre-reinforced polymer composite materials, integration of durability data and methods for service life prediction of structural members utilizing fibre-reinforced polymer composites, development of methods and techniques for materials selection based on life cycle assessments of structural components and systems, and structurally and economically feasible.

Due to the above-mentioned high strength to weight ratio of fibre composite materials, it has become increasingly more popular to produce different kinds of items or constructions from such materials.

Such constructions made from fibre-reinforced composite materials are often manufactured by means of either resin transfer moulding (RTM) or vacuum assisted resin transfer moulding (VARTM) processes. Both processes involve two basic steps: first fabrication of a fibre preform inside a mould with the shape of the finished composite material, where the preform is comprised by a plurality of fibres in most cases present as fabric layers and second impregnation of the preform with a resin. During the process, full impregnation of the fibres is essential for the performance of the final composite material.

In RTM processes, the matrix resin is injected into the mould under pressure. In the VARTM process, the resin is drawn into the mould by applying a pressure inside the mould that is lower than the pressure outside the mould. If a thermoplastic resin is used, the resin is injected or drawn into the mould at a temperature above its melting point and upon impregnation of the preform, a temperature reduction will cause the resin to solidify and constitute the matrix of the composite material. For thermosetting resins, the resin is injected or drawn into the mould at a temperature where it is in a liquid state and upon impregnation of the preform, the resin is allowed to cure through polymerisation upon which the final composite material is obtained.

However, a problem with both these processes is that, in general, they are rather time-consuming. Furthermore, components produced by these processes often need further processing such as milling or cutting to reach the desired shape.

Outer components made of biodegradable fibre and resins are so far only in use for motorsports, with no demand for lifetime durability. The parts are typically made using thermoset processing, which requires high pressure, vacuum and very long curing times. This is a blocking point for large-scale industrialization in terms of very high cost of the components. Further, thermoset components cannot be re-melted and reused like thermoplastic parts can

It is therefore an object of the present invention to provide a faster and more efficient method for producing composite lightweight constructions than the ones known in the art.

### Summary of the invention

The description herein of any aspect or embodiment of the invention using terms such as "comprising", "having," "including," or "containing" with reference to an element or elements is intended to provide support for a similar aspect or embodiment of the invention that "consists of", "consists essentially of", or "substantially comprises" that particular element or elements, unless otherwise stated or clearly contradicted by context, e.g. a composition described herein as comprising a particular element should be understood as also describing a composition consisting of that element, unless otherwise stated or clearly contradicted by context. It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

As used herein, the singular forms "a," "an," and "the" are intended to include the plural forms, including "at least one," unless the content clearly indicates otherwise. "At least one" is not to be construed as limiting "a" or "an."

The use of any examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

The present invention solves the above problems via the herein disclosed aspects. Thus, disclosed herein in a 1st aspect is a sheet of pre-preg fibre composite material. The sheet of pre-preg fibre composite material comprises one or more sheets formed from a composite mixture comprising one or more fibrous materials and one or more resins. The one or more fibrous materials and one or more resins is selected from biodegradable material.

As disclosed herein, a biodegradable material is a material, which degrades under biological (such as microbial) action. The one or more resins will, when cured, form into a biodegradable plastic, which again is a plastic that degrades under biological action. Some biodegradable plastics are "compostable" (but not all), which means they degrade under controlled conditions, such as those occurring at compost (or anaerobic digestion) sites.

The biodegradability may be varying depending on the resin and fibrous material selected. Some may degrade under certain specified and tested conditions (e.g. degradable in soil, in wastewater treatment plants, etc), but many may need industrial composting facilities. Here they may be biodegraded in an open environment, but the speed at which this occurs is wide-ranging.

The resins used to make the bioplastics may mean that the bioplastic is either *bio-based* or *biodegradable* or a combination of both.

Bio-based plastic means that a renewable source is used to make the particular plastic. For example, sugar cane is processed to produce ethylene, which can then be used to manufacture, for example, polyethylene (PE). Starch can be processed to produce lactic acid and subsequently polylactic acid (PLA). The properties of bio-based plastics can vary considerably from material to material.

Bio-based plastics can be very different from biodegradable plastics in terms of applications and end-of-life management. They are often similar to regular plastic; just the fossil source is replaced with a biological one (meaning it can behave just like fossil-based plastic and should therefore go to recycling, preferably, or be disposed of). However, some bio-based plastics can be also biodegradable (e.g. PLA), but not all of them.

One of the advantages of using the sheet of pre-preg fibre composite material according to the 1st aspect is that the fibre materials can be grown in all regions, they can be harvested several times a year, they do not require a lot of water, and they are CO₂ negative. As the resin is also plant-based, they have similar advantages. This enables on-shoring production locally, where the sheets are to be used in production, such as EU, NA, and Asia. Further, by using bio-based/plant-based material, a reduction in the need for mined products for e.g. the automotive industry is obtained.

Another advantage is that the products obtained from such a sheet would have a high strength to weight ratio, thus it would be possible to use such sheet in the products of vehicle parts, as disclosed herein, which would assist in emission- and carbon footprint reduction of vehicles using such products.

Yet another advantage is that the sheet and products obtained hereof are mostly comprised of circular raw material, which can be granulated and re-used in a number of applications, and when they can no longer be re-used they may be incinerated for heating purposes resulting a zero emission part, especially if produced using solar powered production units.

Disclosed herein in a 2nd aspect is a sheet of pre-preg fibre composite material, wherein the sheet of pre-preg fibre composite material comprises one or more sheets formed from a composite mixture comprising one or more fibrous materials and one or more resins. The one or more fibrous materials and one or more resins is selected from biodegradable material, and the sheet of pre-preg fibre composite material is configured to form a three-dimensional item by positioning the sheet of pre-preg fibre composite material in a mould and heating the sheet of pre-preg fibre composite material to form the three-dimensional formed item.

One of the advantages of having the sheet of pre-preg fibre composite material being configured to form a three-dimensional item according to the 2nd aspect is that it enables final forming of the components with no need for further processing. It may allow short cycle times that makes the components cost effective.

Another advantage is that it may allow for application of a decorative film by IMD (In mould decoration), hot stamping or other similar process. The sheets/blankets can be stacked in magazines and be placed in the forming cells without interrupting the forming process, hence very small labour impact as the cell is "self-operating" using computer generated simulations, which can predict the flow of the pre-preg into the tool, and can eventually generate the perfect preformed sheets (using trial and error).

Disclosed herein in a 3rd aspect is a use of a sheet of pre-preg fibre composite material according to any of the 1st and 2nd aspects for producing a composite lightweight construction.

Disclosed herein in a 4th aspect is a use of a sheet of pre-preg fibre composite material according to any of the 1st and 2nd aspects for producing an outer surface component.

Disclosed herein in a 5th aspect is a three-dimensional formed composite lightweight construction. The three-dimensional formed composite lightweight construction is obtained by heating the sheet of pre-preg fibre composite material according to any of the 1st and 2nd aspects and forming the three-dimensional composite lightweight construction by pressing the heated sheet of pre-preg fibre composite material into the three-dimensional formed composite lightweight construction.

Disclosed herein in a 6th aspect is a composite lightweight construction for use as an exterior surface. The composite lightweight construction is a fibre-reinforced polymer composite material comprising a polymer matrix and one or more fibrous materials. The one or more fibrous materials and the polymer matrix being selected from biodegradable material.

Fibre-reinforced polymer (FRP) composite material, also sometimes called fibre-reinforced plastic, is a composite material made of a polymer matrix reinforced with fibres. Commonly used fibres are glass, carbon, or aramid, although other fibres such as paper or wood or asbestos have been used. In normal FRP, the polymer is usually an epoxy, vinylester, or polyester thermosetting plastic, and phenol formaldehyde resins are also sometimes used. FRPs are commonly used in the aerospace, automotive, marine, and construction industries.

Composite materials are engineered or naturally occurring materials made from two or more constituent materials with significantly different physical or chemical properties which remain separate and distinct within the finished structure. Most composites have strong, stiff fibres in a matrix, which is weaker and less stiff. The objective is usually to make a component, which is strong and stiff, often with a low density. Commercial material commonly has glass or carbon fibres in matrices based on thermosetting polymers, such as epoxy or polyester resins. Sometimes, thermoplastic polymers may be preferred, since they are mouldable after initial production. There are further classes of composite in which the matrix is a metal or a ceramic. For the most part, these are still in a developmental stage, with problems of high manufacturing costs yet to be overcome. Furthermore, in these composites the reasons for adding the fibres (or, in some cases, particles) are often rather complex; for example, improvements may be sought in creep, wear, fracture toughness, thermal stability, etc.

Fibre-reinforced polymer (FRP) are composites used in almost every type of advanced engineering structure, with their usage ranging from aircraft, helicopters and spacecraft through to boats, ships and offshore platforms and to automobiles, sports goods, chemical processing equipment and civil infrastructure such as bridges and buildings. The usage of FRP composites continues to grow at an impressive rate as these materials are used more in their existing markets and become established in relatively new markets such as biomedical devices and civil structures. A key factor driving the increased applications of composites over the recent years is the development of new advanced forms of FRP materials. This includes developments in high performance resin systems and new styles of reinforcement, such as carbon nanotubes and nanoparticles.

In the case of fibre-reinforced polymer composites, environmental concerns appear to be a barrier to its feasibility as a sustainable material especially when considering fossil fuel depletion, air pollution, smog, and acidification associated with its production. In addition, the ability to recycle currently used fibre-reinforced polymer composites is limited and, unlike steel and timber, structural components cannot be reused to perform a similar function in another structure. These problems are mitigated, or reduced by making fibre-reinforced polymer composites from biodegradable material, where both the fibrous material and the polymer matrix is of a biodegradable material.

As disclosed herein, the fibre-reinforced polymer composite material is made of biodegradable fibrous material in matrices based on biodegradable polymers formed from biodegradable resins.

Disclosed herein in a 7th aspect is a use of a composite lightweight construction according to the 6th aspect for an outer surface component, which can be attached in exterior arrangement.

Disclosed herein in an 8ht aspect is a use of a composite lightweight construction according to the 6th aspect for a vehicle outer surface component which can be attached in exterior arrangement to a vehicle.

It is known that a vehicle's weight is an important factor in how much fuel it will consume. The heavier the vehicle, the more energy it needs to get moving. Extra weight also increases a vehicle's rolling resistance, which is a force that resists forward motion produced as the wheels roll over the road. This means that reducing weight is a very effective way to lower a vehicle's fuel consumption. In regards to weight, strict legislation and consumer demand are already making a difference. Automakers are making lighter-weight vehicles by using lighter materials such as aluminium and advanced composites. Automakers are also changing designs in ways that shed weight. These improvements are leading to the use of smaller engines - without any sacrifice in performance, because less power is needed to move a lighter vehicle, however, there is still room for more weight loss. Thus, by using the above mentioned composite light weight construction having the fibre-reinforced polymer composite as disclosed herein, is an effective way of saving weight on a vehicle, as the fibre-reinforced polymer composite is known to have a high strength to weight ratio. Further, the material can be tailored such that it shows similar strength as aluminium used today, however, with and even lower weight.

Disclosed herein in a 9th aspect is an outer surface component configured to withstand climate exposure such as rain, snow, wind and/or sunlight. The outer surface component comprises a composite lightweight construction and an outer skin connected thereto. The outer skin is applied to the composite lightweight construction and the composite lightweight construction is a fibre-reinforced polymer composite material comprising a polymer matrix and one or more fibrous materials, the one or more fibrous materials and the polymer matrix being selected from biodegradable material.

Disclosed herein in a 10th aspect is a vehicle, such as a car or a motor cycle, comprising an outer surface component according to the 9th aspect, the outer surface component being on one or more exterior surfaces of the vehicle.

Disclosed herein in an 11th aspect is a use of an outer surface component according to the 9th aspect for a vehicle outer surface component which can be attached in exterior arrangement to a vehicle.

Disclosed herein in a 12th aspect is a vehicle outer surface component configured to be attached in exterior arrangement to a vehicle to withstand climate exposure such as rain, snow, wind and/or sunlight. The vehicle outer surface component comprises a composite lightweight construction and an outer skin connected thereto. The outer skin is applied to the composite lightweight construction, and the composite lightweight construction is a fibre-reinforced polymer composite material comprising a polymer matrix and one or more fibrous materials, the one or more fibrous materials and the polymer matrix being selected from biodegradable material.

It is an important aspect of present-day manufacturing to use "circular manufacturing" to reduce waste by reusing parts to make new products, such as new vehicles. However, even though there are glimmers of hope, these are currently outweighed by challenges. Thus, vehicles makers, or other producers, may look into alternative ways of reducing the carbon footprint when producing. One way is to use biodegradable materials obtained from bio-based sources as disclosed herein.

Disclosed herein in a 13th aspect is a vehicle, such as a car or a motor cycle, comprising a vehicle outer surface component according to the 12th aspect on one or more exterior surfaces.

Disclosed herein in a 14th aspect is a use of a vehicle outer surface component according to the 12th aspect for a vehicle outer surface component, which can be attached in exterior arrangement to a vehicle.

Disclosed herein in a 15th aspect is a method for producing a composite lightweight construction from a plane sheet of a pre-preg fibre composite material comprising fibres and a resin, such as a biodegradable resin, which method comprises the steps of cutting out a piece of the sheet of pre-preg fibre composite material, which piece has a predetermined size and shape depending on the composite lightweight construction to be produced, heating the cut-out piece to a temperature, at which the pre-preg fibre composite material is formable, forming the composite lightweight construction by pressing the heated piece into a desired three-dimensional shape, and actively cooling the formed composite lightweight construction to a temperature, at which the pre-preg fibre composite material is form-stable, wherein the fibres in the pre-preg fibre composite material are natural fibres, such as sisal, hemp, coconut, flax, jute, kenaf, bamboo, sphagnum, hay or combinations thereof.

Producing composite lightweight constructions using such a method has proven to be significantly faster and more efficient than using methods known in the art for obtaining composite lightweight constructions, such as RTM and VARTM processes.

The use of natural fibres and, potentially, a biodegradable resin in the composite material accommodates the increasing request for using natural and sustainable materials wherever it is possible.

By ensuring that the tools used for pressing the heated piece into the desired three-dimensional shape have correct radii and angles, it can be obtained that the heated piece follows and fills out the contours of the tool parts perfectly so that the fibre composite material is not stretched, which means that the fibre components therein are not damaged during the pressing step of the method.

Another advantage is that it may be highly automated with low labour rate impact, hereby enabling "suitcase" factories across the globe.

Disclosed herein in a 16th aspect is a method according to the 15th aspect, wherein the plane sheets of a pre-preg fibre material used are sheets according to any one of the 1st and the 2nd aspects.

Disclosed herein in a 17th aspect is the use of a sheet according to any one of the 1st and 2nd aspects in a method according to the 15th aspect.

Disclosed herein in an 18th aspect is a formed composite lightweight construction produced by a method according to the 15th aspect.

Disclosed herein in a 19th aspect is a use of a formed composite lightweight construction according to the 18th aspect as a part of a vehicle, in particular as a part of the outside surface of a vehicle.

Disclosed herein in a 20th aspect is a composite lightweight construction for use as an exterior surface. The composite lightweight construction is a fibre-reinforced polymer composite material comprising a polymer matrix and one or more fibrous materials, the one or more fibrous materials being selected from biodegradable material and the composite lightweight construction is obtained by a method according to the 15th aspect.

Disclosed herein in a 21st aspect is a composite lightweight construction for use as an exterior surface, wherein the composite lightweight construction is obtained by a method according to the 15th aspect using a sheet of pre-preg fibre composite material according to any one of the 1st and 2nd aspects.

Effects and features of the 2nd to 21st aspects are to a large extent analogous to those described above in connection with the 1st aspect and *vice versa.* Embodiments mentioned in relation to the 1st aspect are largely compatible with the 2nd to 21st aspects and *vice versa.*

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

### Brief description of the drawings

Figure 1 is a side view of a part of a car comprising vehicle outer surface components according to embodiments of the invention.
Figure 2 illustrates an end part of a composite lightweight construction according to an embodiment of the invention.
Figure 3 illustrates a sheet of pre-preg fibre composite material according to an embodiment of the invention.
Figure 4 illustrates schematically how a piece of pre-preg fibre composite material has been cut out in a step of a method according to an embodiment of the invention.
Figure 5 illustrates schematically the heating of the cut-out piece in a step of a method according to an embodiment of the invention.
Figure 6 illustrates schematically the pressing of the heated piece into a desired three-dimensional shape in a step of a method according to an embodiment of the invention.
Figures 7-11 illustrate schematically five stages of pressing of the heated piece into a desired three-dimensional shape in a step of a method according to another embodiment of the invention.
Figures 12 and 13 are cross-sectional views of composite lightweight constructions according to embodiments of the invention.

### Detailed description of the invention

As described above, disclosed herein is several sheets of pre-preg fibre composite material; use of such sheets of pre-preg fibre composite material for various purposes; three-dimensional formed composite lightweight constructions; use of such composite lightweight constructions for various purposes; outer surface components configured to withstand climate exposure; use of such outer surface components; a vehicle comprising such outer surface components; vehicle outer surface components configured to be attached in exterior arrangement to a vehicle to withstand climate exposure; use of such vehicle outer surface components; vehicles comprising such (vehicle) outer surface components; methods for producing a composite lightweight construction from a plane sheet of a pre-preg fibre composite material, such as the sheets disclosed herein; composite lightweight construction produced by the methods; composite lightweight constructions obtained by such methods using such sheets of pre-preg fibre composite; and use of such composite lightweight constructions.

The sheets, composite lightweight constructions, and (vehicle) outer surface components all comprises one or more fibrous materials and one or more resins/polymer matrix, where the one or more fibrous materials and one or more resins/polymer matrix is selected from biodegradable material.

In one or more embodiments, the biodegradable material is a material, which can be degraded completely into CO2 and water, or organic material by microorganisms and/or natural environmental factors. In one or more embodiments, the biodegradable material is a material, which degrades under biological action. In one or more embodiments, the biodegradable material is a material, which degrades under microbial action.

Biodegradable materials are materials, which can be decomposed by the action of living organisms, usually microbes, into water, carbon dioxide, and biomass. Biodegradable materials may be produced with renewable raw materials, microorganisms, petrochemicals, or combinations of all three, however, even though the words "biomaterial" and "biodegradable material" are similar, they are not synonymous. Not all biomaterials (materials derived partly or entirely from biomass) are biodegradable, and some biodegradable materials are fully petroleum based.

Various biodegradable materials may be used, from biodegradable biomaterials to biodegradable petroleum-based materials.

The biodegradability of the herein disclosed materials may be measured and defined using ISO 14855 (Ultimate Biodegradation - CO2 Evolution). ISO 14855 is a standard biodegradation test method that determines ultimate aerobic biodegradability and disintegration of plastic materials under controlled composting conditions. To successfully compost a material or product, it must pass the phytotoxicity test to determine the quality of compost. This method predominantly measures ultimate aerobic biodegradation by the analysis of evolved carbon dioxide.

Ultimate aerobic biodegradation is when microorganisms fully consume a chemical compound or organic matter by in the presence of oxygen. Produces carbon dioxide, water and mineral salts.

Test requirements for ISO 14855 include standard testing for a minimum of 90 days and then the biodegradation results are determined after an analysis of evolved CO₂.

Solid aerobic biodegradation and disintegration of plastic materials under controlled composting conditions is generally the accepted form of testing to make product performance claims.

In one or more embodiments, the biodegradable materials are materials, which can pass the ISO 14855 test.

In one of more embodiments, the one or more resins are selected from thermoset resins, thermoplastic resins, or combinations thereof.

The polymer matrix as disclosed herein is synthesized/produced from resins, as disclosed herein, which preferably are resins as from natural origins, such as plants, animals, or microorganisms (bio-materials/bio-based). Such resins/polymer matrix could be, but not limited to: Polyhydroxyalkanoates (PHAs); Polylactic acid (PLA); Starch blends; Cellulose-based plastics; and/or Lignin-based polymer composites.

Polyhydroxyalkanoates (PHAs) are a class of biodegradable material, which is naturally produced by various microorganisms, such as Cuprividus necator. Specific types of PHAs include poly-3-hydroxybutyrate (PHB), polyhydroxyvalerate (PHV) and polyhydroxyhexanoate (PHH). PHA can be further classified into two types: scl-PHA and mcl-PHA. scl-PHA from hydroxy fatty acids with short chain lengths including three to five carbon atoms, while mcl-PHA from hydroxy fatty acids with medium chain lengths including six to 14 carbon atoms.

Polylactic acid (PLA) is thermoplastic aliphatic polyester synthesized from renewable biomass, typically from fermented plant starch such as from corn, cassava, sugarcane or sugar beet pulp. PLA is compostable, but may not be seen as non-biodegradable according to some American and European standards because it does not biodegrade outside of artificial composting conditions, however, as disclosed herein PLA is seen as being a biodegradable material.

Starch blends are thermoplastic polymers produced by blending starch with plasticizers. Because starch polymers on their own are brittle at room temperature, plasticizers are added in a process called starch gelatinization to augment its crystallization. While all starches are biodegradable, not all plasticizers are. Thus, the biodegradability of the plasticizer determines the biodegradability of the starch blend. Biodegradable starch blends include starch/polylactic acid, starch/polycaprolactone, and starch/polybutylene-adipate-co-terephthalate.

Cellulose-based plastics are mainly the cellulose esters, (including cellulose acetate and nitrocellulose) and their derivatives, including celluloid. Cellulose can become thermoplastic when extensively modified. An example of this is cellulose acetate.

Lignin-based polymer composites are bio-renewable natural aromatic polymers with biodegradable properties. Lignin is found as a by-product of polysaccharide extraction from plant material through the production of paper, ethanol, and more. Lignin is useful due to its low weight material and the fact that it is more environmentally friendly than other alternatives. Lignin is neutral to CO₂ release during the biodegradation process. Other biodegradable plastic processes such as polyethylene terephthalate (PET) have been found to release CO₂ and water as waste products produced by the degrading microorganisms. Lignin contains comparable chemical properties in comparison to current plastic chemicals, which includes reactive functional groups, the ability to form into films, high carbon percentage, and it shows versatility in relation to various chemical mixtures used with plastics. Lignin is also stable, and contains aromatic rings. It is both elastic and viscous yet flows smoothly in the liquid phase. Most importantly, lignin can improve on the current standards of plastics because it is antimicrobial in nature.

The polymer matrix as disclosed herein may also be synthesized/produced from resins, as disclosed herein, which petroleum-based, i.e. derived from petrochemicals, which are obtained from fossil crude oil, coal, or natural gas. The most widely used petroleum-based plastics such as polyethylene terephthalate (PET), polyethylene (PE), polypropylene (PP), and polystyrene (PS) are not biodegradable. However, the following petroleum-based materials, which are biodegradable may be selected from: Polyglycolic acid (PGA); Polybutylene succinate (PBS); Polycaprolactone (PCL); Poly(vinyl alcohol) (PVA, PVOH); Polybutylene adipate terephthalate (PBAT).

Polyglycolic acid (PGA) is a thermoplastic polymer and an aliphatic polyester. PGA is often used in medical applications such as PGA sutures for its biodegradability. The ester linkage in the backbone of polyglycolic acid gives it hydrolytic instability. Thus, polyglycolic acid can degrade into its nontoxic monomer, glycolic acid, through hydrolysis. This process can be expedited with esterases. In the body, glycolic acid can enter the tricarboxylic acid cycle, after which can be excreted as water and carbon dioxide.

Polybutylene succinate (PBS) is a thermoplastic polymer resin that has properties comparable to propylene. It is used in packaging films for food and cosmetics. In the agricultural field, PBS is used as a biodegradable mulching film. PBS can be degraded by Amycolatopsis sp. HT-6 and Penicillium sp. strain 14-3. In addition, Microbispora rosea, Excellospora japonica and E. viridilutea have been shown to consume samples of emulsified PBS.

Polycaprolactone (PCL) is a material where the hydrolysis of its ester linkages offers its biodegradable properties. It has been shown that Bacillota and Pseudomonadota can degrade PCL. Penicillium sp. strain 26-1 can degrade high density PCL; though not as quickly as thermotolerant Aspergillus sp. strain ST-01. Species of clostridium can degrade PCL under anaerobic conditions.

Poly(vinyl alcohol) (PVA, PVOH) is one of the few biodegradable vinyl polymers that is soluble in water. Due to its solubility in water (an inexpensive and harmless solvent), PVA has a wide range of applications including food packaging, textiles coating, paper coating, and healthcare products.

Polybutylene adipate terephthalate (PBAT) is a biodegradable random copolymer.

In one or more embodiments, the one or more resins is natural resins selected from one or more biodegradable resins.

In one or more embodiments, the one or more resins is natural resins selected from one or more bio-based/bio-material and biodegradable resins.

In one or more embodiments, the composite material comprises a continuous matrix of a resin reinforced with the one or more fibrous materials.

In one or more embodiments, the sheet of pre-preg fibre composite material is configured to form a three-dimensional item by heating the sheet of pre-preg fibre composite material and positioning it in a mould and heating the sheet of pre-preg fibre composite material to form the three-dimensional formed item.

In one or more embodiments, the one or more resins is based on plant triglycerides.

Plant triglycerides are triglycerides derived from plant (or animal) oil. By being based on plant triglycerides is meant that after deriving the triglyceride from the source it is functionalized with chemical groups that renders it polymerizable. These functional groups may be introduced through chemical reactions employing oil-based products to incorporate reactive groups such as epoxy, acrylate, and glycerol. The functionalisation by for instance epoxy groups can make the resin less environmentally safe as epoxy is sensitising to the human skin and it uses oil-based products. In addition, the resin based on functionalised triglycerides has elastic modulus and flexural modulus values lower than those of presently used composite matrix materials, even when the functionalised triglycerides are mixed with oil-based components. Examples of plant triglycerides are shown in e.g. WO 99/21900.

In one or more embodiments, the one or more resins comprises one or more poly lactic acid resins.

Poly lactic acid is a polymer that can be amorphous or semi crystalline. Poly lactic acid can be produced from various plant sources such as maize, beans, peas, sugarcanes and wood. Poly lactic acid has an elastic modulus of 3.2-3.4 GPa which exceeds that of commonly used epoxy, polyester, and vinyl ester resins used as composite matrix material today. As used herein, the term poly lactic acid refers to any of the isomeric states of poly (L-lactic acid), poly (D-lactic acid) and poly (L,D-lactic acid) or mixtures hereof.

In one or more embodiments, the resins may comprise at least 50% by weight of lactide or other cyclic diesters such as glycolide or poly lactic acid oligomers or other oligomers that can be synthesised from the aforementioned cyclic diesters such as poly glycolic acid oligomers with an average molecular mass between 200 and 6000 g/mol or at least 50% by weight of cyclic diester and oligomers synthesised from said diesters. As used herein, the term lactide refers to any of the isomeric states of L-lactide, D-lactide and meso-lactide or mixtures hereof.

The cyclic diester and oligomer may be selected from lactide and poly lactic acid oligomer, respectively. The lactide part of the resins may be polymerised to poly lactic acid or the poly lactic acid oligomers may be fully polymerised inside the mould containing the composite material by one or more catalysts suitable for the ring-opening polymerisation of lactide and other cyclic diesters or catalysis of polymerisation of poly lactic acid. Numerous catalysts are known to the skilled person, such as stannous octoate, zinc octoate, stannous alkoxides, aluminium isopropoxide, 4-(dimethylamino)pyridine and novozym 435 and their concentration can be varied as known. Common catalyst concentrations are 0.01 to 0.5 % by weight.

In one or more embodiments, the resins are impregnated to the fibres comprised in the composite material.

In one or more embodiments, the resins are at least 70% by weight of lactide or poly lactic acid oligomers with an average molecular mass between 200 and 6000 g/mol. In one or more embodiments, the resins is at least 70% by weight of lactide and poly lactic acid oligomers.

Full biodegradability may be achieved by employing biodegradable plant based material as the resins in the composition or through addition of crude oil-based components capable of undergoing biodegradation.

In one of more embodiments, the composite material/the fibre-reinforced polymer composite material further comprises one or more components for increasing the fracture toughness of the resins when polymerized, such as poly olefins, poly hydroxyalkanoates, poly (ethylene glycole), and/or organo modified layered silicates such as montmorillonite.

In one of more embodiments, the composite material/the fibre-reinforced polymer composite material further comprises one or more components increasing the impact strength of the resins when polymerized, such as triacetin, poly (butylene succinate), glucose monoesters, and/or polyethylene.

In one of more embodiments, the composite material/the fibre-reinforced polymer composite material further comprises one or more cross-linking agents. By adding cross-linking agents, the polymer matrix when formed may be able to form interconnecting bonds between polymer chains, which can increase the glass transition temperature and strength of the polymer matrix. One example of cross-linking agent is a molecule with at least two amine groups within the entire molecule. Preferably, the cross-linking agent has at least three primary amine groups as this increases the probability of cross-linking and the primary amine groups are more reactive than the secondary ones. The amine groups can undergo reaction with the ester group in e.g. a poly lactic acid chain or other structures within the polymer matrix that contain ester bonds to yield an amide. With multiple reactive groups within the molecule, the amine molecule can be connected to different polymer chains containing ester bonds and thereby establish a cross-linked structure. Other suitable cross-linking agents are molecules containing at least two carboxylic acids groups or at least two hydroxy groups. Exemplified is e.g. the terminal groups of poly lactic acid chains, which are hydroxyl groups. Such groups can undergo reaction with a carboxylic acid group to yield a linkage of the two molecules through an ester bond under the displacement of water. Other suitable cross-linking agents could be molecules comprising multiple groups able to undergo reaction with ester bonds, hydroxyl groups or other functional groups present in the resins of the composite material. Alternative, the cross-linking agent can comprise chemical groups with a functionality to bind as described above in addition to one or more other functional groups that can bind to another cross-linking agent. This can be chemical groups such as carbon-carbon double or triple bonds, epoxy, and/or hydroxyl groups.

In one of more embodiments, the composite material/the fibre-reinforced polymer composite material is dyed with one or more molecules. This enables tailoring of the colour of the polymer matrix after polymerization of the resins to a specific application, where a certain colour may be required. Commercial dyes are known to the skilled person.

In one of more embodiments, the composite material/the fibre-reinforced polymer composite material further comprises one or more flame retarding molecules or compounds. This may be used to increase the fire safety of the formed material. Flame retarders are known to the skilled person, such as spirocyclic pentaerythritol bisphosphorate disphosphoryl melamine, organomodified silicates, triazine phosphamide, ethyl phosphorodichloridate, and/or aryl polyphenylphosphonates.

In one of more embodiments, the composite material/the fibre-reinforced polymer composite material the comprises the fibres required for the reinforcement of the composite material and bio-based polymers such as poly hydroxyalkanoates, poly lactic acid, and/or poly glycolic acid, wherein the fibres can be randomly oriented fibres, mats, layers, films, powder, pellets and coating on other fibres.

In one of more embodiments, the bio-based polymers comprising dyes and/or flame retarders.

In one of more embodiments, the sheet of pre-preg fibre composite material comprises one or more fibrous materials, wherein the one or more fibrous materials is impregnated with one or more resins.

In one of more embodiments, the one or more fibrous materials have a weight between 200 and 1400 g/m², such as between 200 and 1300 g/m², such as between 400 and 1200 g/m², such as between 500 and 1100 g/m², such as between 600 and 1000 g/m², such as between 700 and 900 g/m², such as substantially 400 g/m², such as substantially 500 g/m², such as substantially 600 g/m², such as substantially 700 g/m², such as substantially 800 g/m², or such as substantially 900 g/m².

In one of more embodiments, the one or more fibrous materials is selected from one or more woven sheets of fibrous material, such as one woven sheet of fibrous material, such as at least two woven sheets of fibrous material, such as two woven sheets of fibrous material, or such as at least three woven sheets of fibrous material.

In one of more embodiments, the ratio between the one or more resins and the one or more fibrous materials in the composite mixture is between 30:70 and 70:30 wt./wt.%, such as between 40:60 and 60:40 wt./wt.%.

In one of more embodiments, the composite mixture comprises at last 40 wt.% fibrous material, such as at least 45 wt.%, such as at least 50 wt.%, such as at least 55 wt.%, such as at least 60 wt.%, such as at least 65 wt.%, or such as at least 70 wt.% fibrous material.

In one of more embodiments, the composite mixture comprises less than or equal to 70 wt.% resin, such as less than or equal to 65 wt.%, such as less than or equal to 60 wt.%, such as less than or equal to 55 wt.%, such as less than or equal to 50 wt.%, such as less than or equal to 45 wt.%, or such as less than or equal to 40 wt.% resin.

In one of more embodiments, the composite mixture comprises between 40 and 70 wt.% resin and between 40 and 70 wt.% fibrous material.

In one of more embodiments, the composite mixture consists of resin and fibrous material.

In one of more embodiments, the composite mixture/the fibre-reinforced polymer composite material further comprises a supplementary fibrous material different from the one or more fibrous materials, wherein the supplementary fibrous material comprises at least some fibres that are longer and/or shorter than fibres in the one or more fibrous materials.

In one of more embodiments, the one or more fibrous materials is selected from one or more natural fibrous materials and/or one or more synthetic fibrous materials.

In one of more embodiments, the one or more fibrous materials are selected from sisal, hemp, coconut, flax, jute, kenaf, bamboo, sphagnum, hay or combinations thereof.

In one of more embodiments, the one or more fibrous materials are selected from sisal, hemp, jute, flax, hay or combinations thereof.

In one of more embodiments, the one or more fibrous materials are selected from jute, hemp, flax, or combinations thereof.

In one of more embodiments, the one or more fibrous materials are selected from hemp, flax, or combinations thereof.

In one of more embodiments, the one or more fibrous materials are hemp fibrous material.

In one of more embodiments, the one or more fibrous materials are jute fibrous material.

In one of more embodiments, the one or more fibrous materials are flax fibrous material.

In one of more embodiments, the one or more fibrous materials comprises continuous fibres or discontinuous fibres.

In one of more embodiments, the one or more fibrous materials comprises a plurality of fibres, which are woven and/or bonded together.

In one of more embodiments, the composite mixture comprises at least two sheets of fibrous material and the one or more resins, wherein the one or more resins and the at least two sheets are composed as a sandwich structure with alternating layers of resins and sheets of fibrous material.

In one of more embodiments, the three-dimensional formed composite lightweight construction comprises a doubly curved geometric shape.

In one of more embodiments, at least one or more parts of the three-dimensional formed composite lightweight construction are configured with one or more cut portions on a surface area of the three-dimensional formed composite lightweight construction.

In one of more embodiments, the one or more cut portions are configured to form at least one of a through-hole, hole, notch and/or cavity within the three-dimensional formed composite lightweight construction.

In one of more embodiments, the three-dimensional formed composite lightweight construction further comprising a layer, back-injection moulded to the three-dimensional formed composite lightweight construction.

In one of more embodiments, at least one or more parts of the composite lightweight construction are configured with one or more cut portions on a surface area of the composite lightweight construction.

In one of more embodiments, the one or more cut portions are configured to form at least one of a through-hole, hole, notch and/or cavity within the composite lightweight construction.

In one of more embodiments, the composite lightweight construction further comprising a layer, back-injection moulded to the composite lightweight construction.

In one of more embodiments, the composite lightweight construction further comprising a layer, back-injection moulded to the composite lightweight construction opposite the outer skin.

In one of more embodiments, the polymer matrix comprises one or more resins selected from thermoset resins, thermoplastic resins, or combinations thereof.

In one or more embodiments, the polymer matrix comprises one or more resins selected from one or more biodegradable resins, such that the polymer matrix is biodegradable.

In one or more embodiments, the polymer matrix comprises one or more resins selected from one or more bio-based/bio-material and biodegradable resins such that the polymer matrix is a bio-based and biodegradable material.

In one or more embodiments, the fibre-reinforced polymer composite material comprises a continuous polymer matrix reinforced with the one or more fibrous materials.

In one or more embodiments, the polymer matrix is based on plant triglycerides.

In one or more embodiments, the polymer matrix comprises at least one or more poly lactic acid resins.

In one of more embodiments, the composite lightweight construction has a surface roughness of less than 120 RMS, such as less than 100 RMS, such as less than 80 RMS.

RMS is the root mean square average of the profile height deviations from the mean line, recorded within the evaluation length. RMS can be measured using ASME B46.1.

In one of more embodiments, the fibre-reinforced polymer composite material comprises at least two sheets of fibrous material and a polymer matrix, wherein the polymer matrix and the at least two sheets are composed as a sandwich structure with alternating layers of polymer matrix and sheets of fibrous material.

The fibre-reinforced polymer (FRP) composites are increasingly being considered as an enhancement to and/or substitute for infrastructure components or systems that are constructed of traditional civil engineering materials, namely concrete and steel. Fibre-reinforced polymer composites are lightweight, non-corrosive, exhibit high specific strength and specific stiffness, are easily constructed, and can be tailored to satisfy performance requirements.

Fibre-reinforced polymer reinforcements offer a number of advantages such as corrosion resistance, non-magnetic properties, high tensile strength, lightweight and ease of handling. However, they generally have a linear elastic response in tension up to failure (described as a brittle failure) and a relatively poor transverse or shear resistance. They also have poor resistance to fire and when exposed to high temperatures. They lose significant strength upon bending, and they are sensitive to stress-rupture effects. Moreover, their cost, whether considered per unit weight or based on force carrying capacity, is high in comparison to conventional steel reinforcing bars or prestressing tendons.

The polymers of a fibre-reinforced polymer composite may be combined with various agents to enhance or in any way alter the material properties of polymers, and the result may be referred to as a plastic. The composite plastics can be of homogeneous or heterogeneous mix. Composite plastics refer to those types of plastics that result from bonding two or more homogeneous materials with different material properties to derive a final product with certain desired material and mechanical properties. The fibre-reinforced plastics (or fibre-reinforced polymers) are a category of composite plastics that specifically use fibre materials (not mix with polymer) to mechanically enhance the strength and elasticity of plastics. The original plastic material without fibre reinforcement is known as the matrix. The matrix is a tough but relatively weak plastic that is reinforced by stronger stiffer reinforcing filaments or fibres. The extent that strength and elasticity are enhanced in a fibre-reinforced plastic depends on the mechanical properties of the fibre and matrix, their volume relative to one another, and the fibre length and orientation within the matrix. Reinforcement of the matrix occurs by definition when the fibre-reinforced polymer material exhibits increased strength or elasticity relative to the strength and elasticity of the matrix alone.

The linking of small molecules (monomers) to make larger molecules is a polymer. Polymerization requires that each small molecule have at least two reaction points or functional groups. There are two distinct major types of polymerization processes, condensation polymerization, in which the chain growth is accompanied by elimination of small molecules such as H₂O or CH₃OH, and in addition polymerization, in which the polymer is formed without the loss of other materials. There are many variants and subclasses of polymerization reactions.

The fibre-reinforced composites are materials in which a fibre made of one material is embedded in another material (the matrix). The polymer composites are any of the combinations or compositions that comprise two or more materials as separate phases, at least one of which is a polymer. By combining a polymer with another material, such as glass, carbon, or another polymer, it is often possible to obtain unique combinations or levels of properties. Typical examples of synthetic polymeric composites include glass-, carbon-, or polymer-fibre-reinforced.

Typically, the goal is to improve strength, stiffness, toughness, or dimensional stability by embedding particles or fibres in a matrix or binding phase. A second goal is may be to use inexpensive, readily available fillers to extend a more expensive or scarce resin; this goal is increasingly important as petroleum supplies become costlier and less reliable.

Today, the most commonly used fibre-reinforced polymer composites are based on glass fibres, cloth, mat, or roving embedded in a matrix of an epoxy or polyester resin.

The material as disclosed herein is usually made of two components, a fibre and matrix. The fibre is selected from a biodegradable fibre, and the matrix is selected from a biodegradable polymer, preferable a thermoplastic polymer. The fibre is embedded in the polymer matrix in order to make the matrix stronger. Fibre-reinforced composites are strong and light. They are often stronger than steel, but weigh much less. This means that composites can be used to make automobiles lighter, and thus much more fuel-efficient.

By having both the fibres and the polymer being selected from materials being biodegradable waste products that would traditionally cost money for disposal, now become a beneficial resource, allowing recycling to be both profitable and environmentally conscious. Further, the normally posed challenge with plastics in recycling processes, especially for fibre-reinforced plastics where the fibres themselves are difficult to remove from the matrix and preserve for reuse is also alleviated by using environmentally friendly matrices and fibrous material.

In one of more embodiments, the ratio between the polymer matrix and the one or more fibrous materials in the fibre-reinforced composite polymer is between 30:70 and 70:30 wt./wt.%, such as between 40:60 and 60:40 wt./wt.%.

In one of more embodiments, the fibre-reinforced composite polymer comprises at last 40 wt.% fibrous material, such as at least 45 wt.%, such as at least 50 wt.%, such as at least 55 wt.%, such as at least 60 wt.%, such as at least 65 wt.%, or such as at least 70 wt.% fibrous material.

In one of more embodiments, the fibre-reinforced composite polymer comprises less than or equal to 70 wt.% polymer matrix, such as less than or equal to 65 wt.%, such as less than or equal to 60 wt.%, such as less than or equal to 55 wt.%, such as less than or equal to 50 wt.%, such as less than or equal to 45 wt.%, or such as less than or equal to 40 wt.% polymer matrix.

In one of more embodiments, the fibre-reinforced composite polymer comprises between 40 and 70 wt.% polymer matrix and between 40 and 70 wt.% fibrous material.

In one of more embodiments, the fibre-reinforced composite polymer consists of polymer matrix and fibrous material.

In one of more embodiments, the composite lightweight construction comprises a doubly curved geometric shape.

In one of more embodiments, the outer surface component is a vehicle outer surface component, which can be attached in exterior arrangement to a vehicle.

In one of more embodiments, the outer surface component is a vehicle exterior decorative component, which can be attached in exterior arrangement to a vehicle.

In one of more embodiments, the outer skin is applied directly to the composite lightweight construction.

In one of more embodiments, the outer skin is applied by coating.

In one of more embodiments, the outer skin is applied by film, such as film lamination.

In one of more embodiments, the outer skin is applied by film, such as film lamination after or during heating in the mould.

In one of more embodiments, the outer skin is attached by in mould decoration (IMD), hot stamping, wet coating, spray painting, or variations thereof.

In one of more embodiments, the outer skin is selected from a polyester material.

In one of more embodiments, the outer skin is comprised of a non-biodegradable plastic.

In one of more embodiments, the outer skin is at least partially coloured.

In one of more embodiments, the outer skin is wear-, scratch-, and/or UV-resistant.

Wear resistance is the ability of a material to resist the progressive loss of volume from its surface through mechanical actions such as repeated rubbing, sliding, or scraping. Wear-resistant materials can be improved by using additives such as glass and carbon. Additionally, solid lubricants can be used to eliminate the need for extra lubrication, offering advantages such as reduced wear, better operating characteristics, and greatly reduced maintenance efforts.

Scratch-resistant essentially means that the product is able to withstand minor scratches. Scratch-resistance can be improved by implementing anti-scratch coating, which is a type of protective coating or film applied to an object's surface for mitigation against scratches. Scratches are small surface-level cuts left on a surface following interaction with a sharper object. Anti-scratch coatings provide scratch resistances by containing tiny microscopic materials with scratch-resistant properties. Scratch resistance materials come in the form of additives, filters, and binders. Besides materials, scratch resistances is impacted by coating formation techniques. Scratch resistance is measured using the Scratch-hardness test.

UV resistance refers to a material's ability to avoid degradation caused by the absorption of UV radiation. The sun's UV rays break down chemical bonds in polymers, causing plastics to wear down and disintegrate over time. This is known as photodegradation. Photodegradation can cause discoloration (especially yellowing or whitening known as "chalking"), contributing to loss of impact and tensile strength and making plastics brittle and prone to cracking or breaking. UV damage also negatively impacts elongation, which is the ability of a material to resist changes before irreversible deformation. UV resistance may be achieved by the use of additives such as UV stabilizers, black coloration (typically using carbon black) or protective surface coatings (such as paint, or metallization). The addition of carbon black is a low cost and typically very effective way of creating UV resistant plastics.

In one of more embodiments, the composite lightweight construction is a three-dimensional shaped structure formed by positioning the fibre-reinforced polymer composite material in a mould and heating and pressing the fibre-reinforced polymer composite material into the three-dimensional shaped structure.

In one of more embodiments, the composite lightweight construction is a three-dimensional shaped structure formed by positioning the composite lightweight construction material in a mould and heating and pressing the composite lightweight construction into the three-dimensional shaped structure.

In one of more embodiments, the composite lightweight construction is a three-dimensional shaped structure formed by preheating a sheet of a pre-preg fibre composite material and positioning the sheet of a pre-preg fibre composite material in a mould and heating and pressing the sheet of a pre-preg fibre composite material into the three-dimensional shaped structure.

In one of more embodiments, the composite lightweight construction is a three-dimensional shaped structure formed by preheating the fibre-reinforced polymer composite material and positioning the fibre-reinforced polymer composite material in a mould and heating and pressing the fibre-reinforced polymer composite material into the three-dimensional shaped structure.

In one of more embodiments, the composite lightweight construction is a three-dimensional shaped structure formed by preheating the composite lightweight construction material and positioning the composite lightweight construction material in a mould and heating and pressing the composite lightweight construction material into the three-dimensional shaped structure.

In one of more embodiments, the outer surface component is an exterior trim on one or more exterior surfaces.

In one of more embodiments, the vehicle outer surface component is a vehicle exterior decorative component, which can be attached in exterior arrangement to a vehicle.

In one of more embodiments, the vehicle outer surface component is an exterior decorative component on one or more exterior surfaces.

The use of natural fibres and a biodegradable resin in the composite material accommodates the increasing request for using natural and sustainable materials wherever it is possible.

In one or more embodiments, the step of cutting out the piece is performed using computer-controlled cutting equipment, such as using laser cutting, cold or warm knife cutting, water cutting or air cutting.

These types of cutting have proven to be suitable for cutting out the piece from the pre-preg fibre composite material both sharply and fast.

In one or more embodiments, the step of heating the cut-out piece is performed using an infrared oven.

Infrared ovens transfer heat faster at higher temperatures than conduction and convection ovens and are initially less costly than such ovens. Infrared ovens deliver heat in exact amounts to a specific point and do not heat up the surrounding space like a convection or conduction oven. Infrared ovens heat primarily through radiation and at faster rates than convection ovens. Utilizing infrared ovens allows a significant increase in the level and control of the process heating.

The use of infrared ovens can also help driving the process efficiently. The reduction of work-in-process and the increase in throughput can be up to 10 times that of convection ovens.

Lastly, the use of infrared ovens can provide environmental benefits. For instance, electric infrared ovens do not consume fossil fuel (at the point of use). Another quality improvement is reduced air contamination. By design, convection heating moves a lot of air, which may contain particulates that can detrimentally affect the quality of the composite lightweight constructions being produced by the method.

In one or more embodiments, the duration of the step of heating the cut-out piece is between 30 seconds and 90 seconds, preferably between 45 seconds and 60 seconds.

In order to speed up the process, these durations have proven to be suitable and appropriate.

In one or more embodiments, in the step of heating the cut-out piece, the cut-out piece is heated to a temperature between 150°C and 250°C, preferably between 180°C and 220°C, most preferred between 185°C and 190°C.

These temperature intervals have proven to be suitable for making sure that the heated piece is still formable during a sufficient period for being pressed into the desired three-dimensional shape.

In one or more embodiments, the heated piece is moved from a first place, at which it is heated, such as an infrared oven, to a second place, at which it is formed into a composite lightweight component, such as a forming station, by means of a robot and/or a sliding conveyor.

The use of robots and sliding conveyors have proven to be fast and reliable ways to move the heated piece, minimizing the cooling of the heated piece before it is ready to be formed into the composite lightweight construction.

In one or more embodiments, the step of forming the composite lightweight construction is performed using a forming station comprising a press mould preheated to a temperature of between 50°C and 150°C, preferably between 70°C and 135°C, most preferred between 90°C and 125°C, which temperature is kept while pressing the heated piece into the desired three-dimensional shape.

These temperature ranges have proven to be suitable for keeping the heated piece formable while pressing it into the desired three-dimensional shape.

In one or more embodiments, following a holding time of between 3 and 30 seconds, preferably between 5 and 20 seconds, most preferred between 8 and 12 seconds after pressing the heated piece into the desired three-dimensional shape, the step of actively cooling the formed composite lightweight construction is performed by a cooling system within the forming station, while the composite lightweight construction is still being kept in the desired shape within the forming station.

These time intervals have proven to be suitable for making sure that the composite lightweight construction will keep the desired three-dimensional shape after being cooled to a temperature, at which it is form-stable.

In one or more embodiments, the step of forming the composite lightweight construction is performed using a forming station comprising one or more movable parts, each of which one or more moveable parts are moved from a first withdrawn position to a second protruding position during the step of forming the composite lightweight construction and returned to the first withdrawn position when the step of actively cooling the formed composite lightweight construction has been completed.

By using movable parts in the forming station, it is possible to obtain three-dimensional shapes of the composite lightweight construction, which would not be obtainable by simply pressing two form parts against each other.

In one or more embodiments, in the step of actively cooling the formed composite lightweight construction, the formed composite lightweight construction is cooled to a temperature between 30°C and 70°C, preferably between 40°C and 60°C, most preferred around 50°C.

These temperature ranges have proven to be suitable for making sure that the composite lightweight construction is form-stable, when is leaves the mould, in which it has been pressed into its three-dimensional shape.

In one or more embodiments, the formed composite lightweight construction obtains its final shape and size by pressing the heated piece into the desired three-dimensional shape.

If every step of the method is performed carefully and accurately, a composite lightweight construction with the correct shape and surface can be obtained immediately by pressing the heated piece into the desired three-dimensional shape.

In one or more embodiments, the heated piece is pressed into the desired three-dimensional shape in a closed mould so that a small amount of resin can be injected into the mould during the step of forming the composite lightweight construction for filling in potential minor gaps, whereby the formed composite lightweight construction obtains its final shape and size.

In order to ensure that a perfect surface of the composite lightweight construction is obtained, the mould in which the heated piece is pressed into the desired three-dimensional shape may be a closed mould, so that tiny amounts of resin may be injected to fill out potential minor gaps or recesses therein.

In one or more embodiments, the piece that is cut out of the sheet of pre-preg fibre composite material is slightly oversized, and the method, after the step of actively cooling the formed composite lightweight construction, further comprises a step of processing the formed composite lightweight construction, for instance by milling, so that the formed composite lightweight construction obtains its final shape and size.

In order to ensure that the edges of the composite lightweight construction are perfect, the composite lightweight construction may be formed with a little extra material along the edges, which may subsequently by removed to obtain the desired edges.

In one or more embodiments, the method further comprises, before the step of cutting out a piece of the sheet of pre-preg fibre composite material, a step of placing a decorative and/or protective film or foil, such as a polyester film or foil, on one side of the sheet of pre-preg fibre composite material, so that an outer skin with decorative and/or protective properties can be obtained on a front side of the formed composite lightweight construction using IMD (in-mould decoration) techniques or variation thereof.

For decorative purposes and for making the composite lightweight construction more resistant to climate exposures, such as rain, snow, wind and/or sunlight, such an outer skin having, for instance, waterproof or UV protective properties may be advantageous.

In one or more embodiments, the method further comprises, after the step of actively cooling the formed composite lightweight construction, a step of adding a decorative and/or protective surface layer to a front side of the composite lightweight construction, for instance by hot stamping, wet coating, spray painting or variations thereof.

For decorative purposes and for making the composite lightweight construction more resistant to climate exposures, such as rain, snow, wind and/or sunlight, such an outer skin having, for instance, waterproof or UV protective properties may be advantageous.

In one or more embodiments, the method further comprises, after the step of actively cooling the formed composite lightweight construction, a step of sealing a rear side of the formed composite lightweight construction, for instance using a resin.

This is a suitable way to prevent moisture from reaching the fibre composite material, thereby potentially initiating a breakdown of the composite lightweight construction.

In one or more embodiments, the method is completely automated and performed by computer-controlled robots and machines.

In order to obtain as fast, reliable and uniform production of composite lightweight constructions, a completely computer-controlled and automatic production process is preferred.

When describing the embodiments, the combinations and permutations of all possible embodiments have not been explicitly described. Nevertheless, the mere fact that certain measures are recited in mutually different dependent claims or described in different embodiments does not indicate that a combination of these measures cannot be used to advantage. The present invention envisages all possible combinations and permutations of the described embodiments.

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

### Detailed description of the drawings

Various examples are described hereinafter with reference to the figures. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

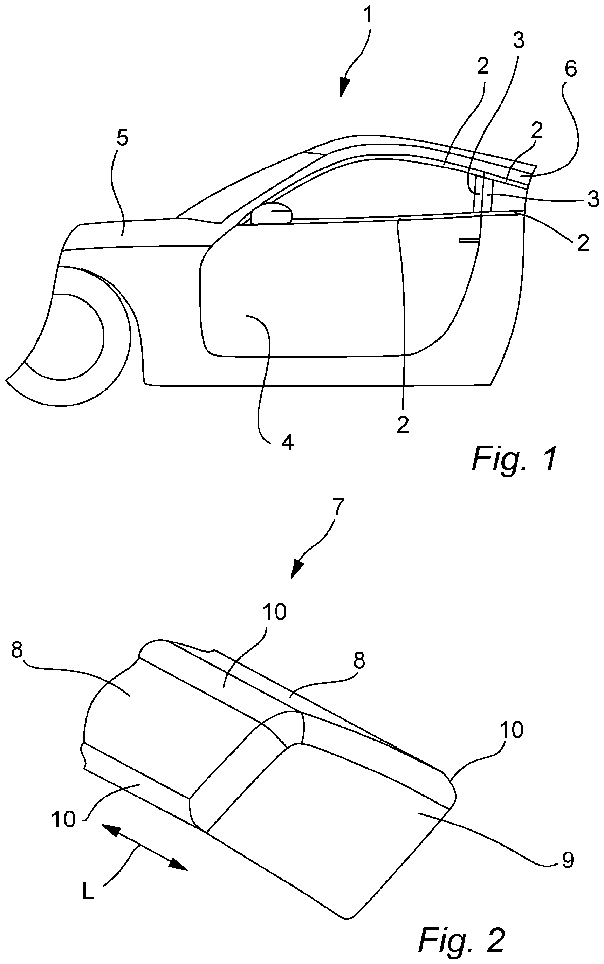

Figure 1 is a side view of a part of a car 1 comprising vehicle outer surface components 2-6 according to embodiments of the invention. This figure illustrates how composite lightweight constructions 7 according to the present invention may be used for exterior decorative trims, such as window trims (also known as daylight open trims) 2, as well as for body parts 3-6 of a car 1 or another vehicle. The exemplary body parts 3-6 illustrated in Fig. 1 comprises B-pillars 3, an exterior doorplate 4, a hood 5 and a part of the side frame 6 of the car.

Figure 2 illustrates an end part of a composite lightweight construction 7 according to an embodiment of the invention. In the illustrated example, the composite lightweight construction 7 consists of an elongated profile having a longitudinal direction L. The end of the profile is closed by and end wall 9, which connects through nicely rounded corners 10 to the side surfaces 8 extending in the longitudinal direction L of the profile. The corners 10 between these side surfaces 8 are also nicely rounded.

Due to the heating of the fibre composite material during the pressing of the cut-out piece 12 (not shown in this figure), the viscosity of the resin therein is sufficiently low to ensure that the resin of two parts of the cut-out piece 12, which are folded during the pressing in such a way that their edges abut to each other, flows together. This means that the resulting corner 10 between such folded together parts of the cut-out piece 12 is not visibly different from the other corners 10 of the profile, although there are no fibres crossing the corner 10, which results from resin of two parts of the cut-out piece 12 melting together.

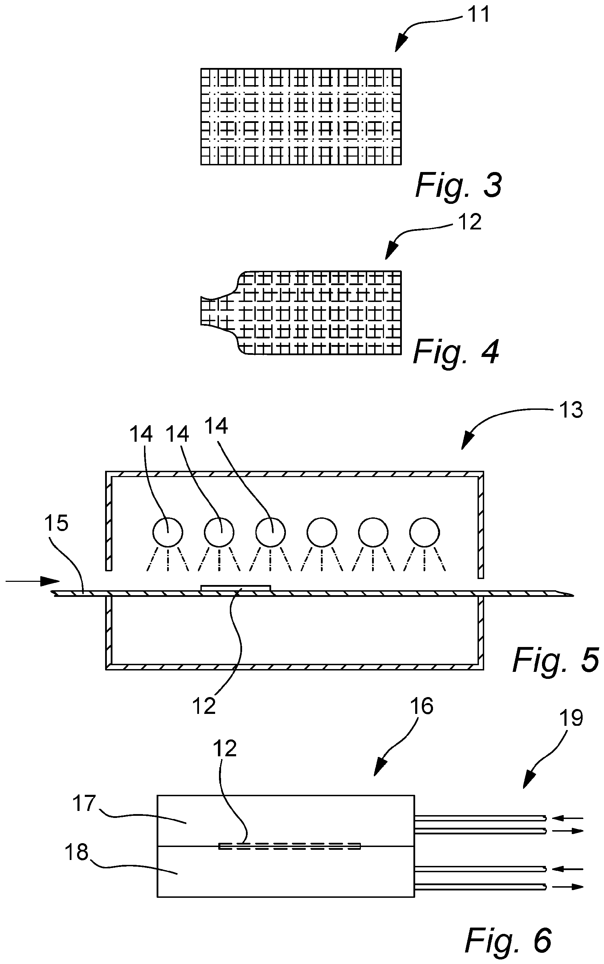

Figure 3 illustrates a sheet 11 of pre-preg fibre composite material according to an embodiment of the invention, which pre-preg fibre composite material comprises a plurality of fibres, which are woven and/or bonded together, and a resin, in which the fibres are at least partly embedded.

Figure 4 illustrates schematically how a piece 12 has been cut out from the sheet 11 of pre-preg fibre composite material in a step of a method according to an embodiment of the invention. The shape and size depends on the composite lightweight construction 7, which is to be produced using the method. Thus, the shape and size of the piece 12 is chosen so that, when it is pressed and formed into the desired three-dimensional shape in a later step of the method, the fibre composite material of the piece 12 fits perfectly, so that the result of this step is the desired composite lightweight construction 7.

Figure 5 illustrates schematically how the cut-out piece 12 is heated in an infrared oven 13 in a step of a method according to an embodiment of the invention. In the illustrated example, the cut-out piece 12 passes through the infrared oven 13 on a sliding conveyor 15, while being heated by a plurality of infrared heating elements 14 arranged therein.

Figure 6 illustrates schematically the pressing of the heated piece 12 into a desired three-dimensional shape in a step of a method according to an embodiment of the invention. In the illustrated example, a forming station 16 comprises a pair of press moulds 17, 18, between which the heated piece 12 is pressed and formed into the desired three-dimensional shape of the composite lightweight construction 7 to be produced. The piping or wiring 19 illustrates how the press moulds 17, 18 are provided with heating and cooling systems, which may be constructed using fluid and/or electric cooling and heating circuits. Although this is not shown in the other described embodiment.

It should be noted that although, for simplicity, the heated piece 12 indicated between the upper press mould 17 and the lower press mould 18 with dotted lines is shown as a plane item, the pressing between the upper 17 and the lower 18 press moulds results in the piece 12 being formed into a three-dimensional shape.

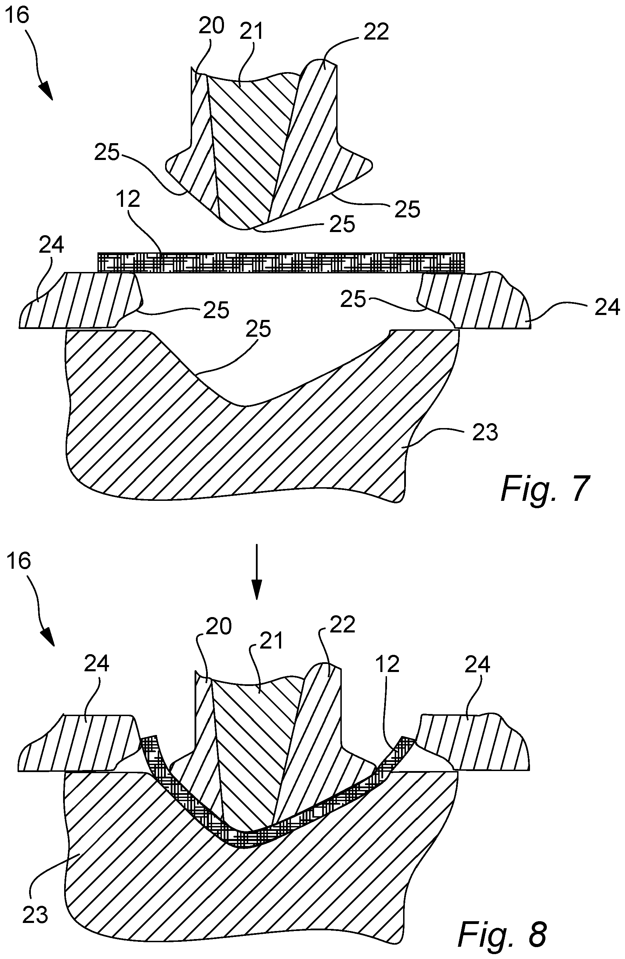

Figures 7-11 illustrate schematically five stages of pressing of the heated piece 12 into a desired three-dimensional shape in a step of a method according to another embodiment of the invention. The forming station 16 illustrated in these figures is quite a lot more complicated than the one illustrated in Fig. 6.

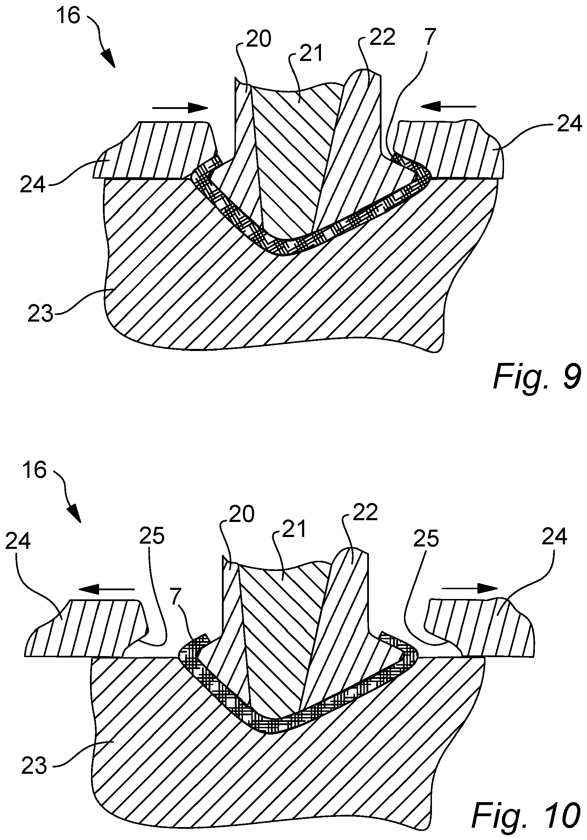

Due to the desired three-dimensionally shape of the resulting composite lightweight construction 7, seen in Figs. 9-11, which cannot be obtained by simply pressing two press moulds against each other, the press moulds of the illustrated forming station 16 comprise two movable parts 24.

In the initial stage shown in Fig. 7, the three parts 20-22 of the upper press mould are arranged in a first position, in which the two outer parts 20, 22 protrude in opposite directions, and the two moveable parts 24 are in a first withdrawn position.

The arrow in the top of Fig. 8 indicates how, in the next stage, the upper press mould 20-22 is moved downwards in order to make its forming surfaces 25 (shown in Fig. 7) meet the upper side of the heated piece 12 and press the heated piece 12 against the forming surface 25 of the lower press mould.

In the third stage, which is shown in Fig. 9, the moveable parts 24 are moved inwards to a second protruding position, in which their forming surfaces 25 (shown in Fig. 7) press the outermost parts of the heated piece 12 towards the outer parts 20, 22 of the upper press mould so that the desired three-dimensional shape of the composite lightweight construction 7 is obtained. The formed composite lightweight construction 7 is held tight and then cooled for some time while all the press mould parts 20-24 are kept in the assembled position shown in Fig. 9.

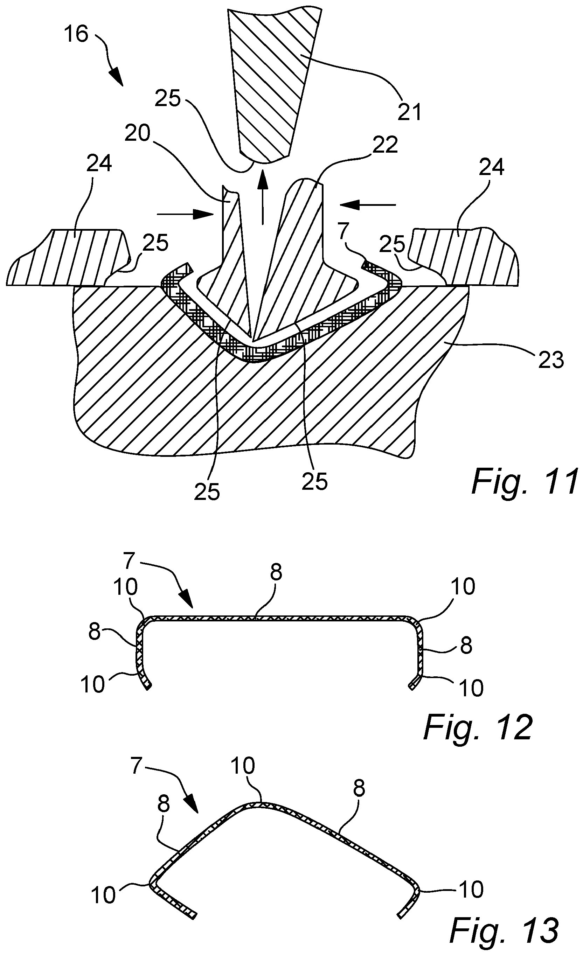

The formed composite lightweight construction 7 is released from the forming station 16 in two stages. The first of those stages is shown in Fig. 10, in which the two moveable parts 24 are moved outwards to the first withdrawn position. In the last stage, shown in Fig. 11, the wedge-shaped part 21 of the upper press mould is withdrawn, allowing the two outer parts 20, 22 to move towards each other to allow the composite lightweight construction 7 to be free of the upper press mould 20-22.

The use of a one-part lower press mould 23 ensures that the front side of the composite lightweight construction 7, which is the side facing the lower press mould 23, will be free of lines or other surfaces irregularities due to the division of the press mould into more than one part.

Figures 12 and 13 are cross-sectional views of composite lightweight constructions 7 according to two different embodiments of the invention, both of which are constituted by elongated profiles with side surfaces 8 and rounded corners 10. The edges of the profile shown in Fig. 12 are formed so that the profile can easily be snapped onto a suitable counterpart (not shown).

It should be noted that, in principle, any three-dimensional shape of the composite lightweight construction 7 may be obtained using the methods according to the present invention, and that the forming station 16 and the press moulds 16-17; 20-24 may be configured in numerous different ways not shown in the figures.

### References

- 1.: Car
- 2.: Window trim / daylight opening trim
- 3.: B-pillar
- 4.: Exterior doorplate
- 5.: Hood
- 6.: Side frame
- 7.: Composite lightweight construction
- 8.: Side surface of composite lightweight construction
- 9.: End wall of composite lightweight construction
- 10.: Rounded corners of composite lightweight construction
- 11.: Sheet of pre-preg fibre composite material
- 12.: Cut-out piece of sheet of pre-preg fibre composite material
- 13.: Infrared oven
- 14.: Infrared heating element
- 15.: Sliding conveyor
- 16.: Forming station
- 17.: Upper press mould
- 18.: Lower press mould
- 19.: Piping or wiring for heating and cooling system in forming station
- 20.: First part of upper press mould
- 21.: Second part of upper press mould
- 22.: Third part of upper press mould
- 23.: Lower press mould
- 24.: Movable mould part
- 25.: Forming surface
- L.: Longitudinal direction of composite lightweight construction

## Claims

1. A method for producing a composite lightweight construction (7) from a plane sheet (11) of a pre-preg fibre composite material comprising fibres and a resin, such as a biodegradable resin, which method comprises the steps of
cutting out a piece (12) of the sheet (11) of pre-preg fibre composite material, which piece (12) has a predetermined size and shape depending on the composite lightweight construction (7) to be produced,
heating the cut-out piece (12) to a temperature, at which the pre-preg fibre composite material is formable,
forming the composite lightweight construction (7) by pressing the heated piece (12) into a desired three-dimensional shape, and
actively cooling the formed composite lightweight construction (7) to a temperature, at which the pre-preg fibre composite material is form-stable,
wherein the fibres in the pre-preg fibre composite material are natural fibres, such as sisal, hemp, coconut, flax, jute, kenaf, bamboo, sphagnum, hay or combinations thereof.

2. The method according to claim 1, wherein the step of heating the cut-out piece (12) is performed using an infrared oven (13).

3. The method according to claim 1 or 2, wherein the duration of the step of heating the cut-out piece (12) is between 30 seconds and 90 seconds, preferably between 45 seconds and 60 seconds.

4. The method according to any of the preceding claims, wherein, in the step of heating the cut-out piece (12), the cut-out piece (12) is heated to a temperature between 150°C and 250°C, preferably between 180°C and 220°C, most preferred between 185°C and 190°C.

5. The method according to any of the preceding claims, wherein the step of forming the composite lightweight construction (7) is performed using a forming station (16) comprising a press mould (17-18; 20-24) preheated to a temperature of between 50°C and 150°C, preferably between 70°C and 135°C, most preferred between 90°C and 125°C, which temperature is kept while pressing the heated piece (12) into the desired three-dimensional shape.

6. The method according to claim 5, wherein following a holding time of between 3 and 30 seconds, preferably between 5 and 20 seconds, most preferred between 8 and 12 seconds after pressing the heated piece (12) into the desired three-dimensional shape, the step of actively cooling the formed composite lightweight construction (7) is performed by a cooling system within the forming station (16), while the composite lightweight construction (7) is still being kept in the desired shape within the forming station (16).

7. The method according to any of the preceding claims, wherein the step of forming the composite lightweight construction (7) is performed using a forming station (16) comprising one or more movable parts (24), each of which one or more moveable parts (24) are moved from a first withdrawn position to a second protruding position during the step of forming the composite lightweight construction (7) and returned to the first withdrawn position when the step of actively cooling the formed composite lightweight construction (7) has been completed.

8. The method according to any of the preceding claims, wherein, in the step of actively cooling the formed composite lightweight construction (7), the formed composite lightweight construction (7) is cooled to a temperature between 30°C and 70°C, preferably between 40°C and 60°C, most preferred around 50°C.

9. The method according to any of the preceding claims, wherein the heated piece (12) is pressed into the desired three-dimensional shape in a closed mould so that a small amount of resin can be injected into the mould during the step of forming the composite lightweight construction (7) for filling in potential minor gaps, whereby the formed composite lightweight construction (7) obtains its final shape and size.

10. The method according to any of claims 1-8, wherein the piece (12) that is cut out of the sheet (11) of pre-preg fibre composite material is slightly oversized, and wherein the method, after the step of actively cooling the formed composite lightweight construction (7), further comprises a step of processing the formed composite lightweight construction (7), for instance by milling, so that the formed composite lightweight construction (7) obtains its final shape and size.

11. The method according to any of the preceding claims, wherein the method further comprises, before the step of cutting out a piece (12) of the sheet (11) of pre-preg fibre composite material, a step of placing a decorative and/or protective film or foil, such as a polyester film or foil, on one side of the sheet (11) of pre-preg fibre composite material, so that an outer skin with decorative and/or protective properties can be obtained on a front side of the formed composite lightweight construction (7) using IMD (in-mould decoration) techniques or variation thereof.

12. The method according to any of claims 1-10, wherein the method further comprises, after the step of actively cooling the formed composite lightweight construction (7), a step of adding an outer skin with decorative and/or protective properties to a front side of the composite lightweight construction (7), for instance by hot stamping, wet coating, spray painting or variations thereof.

13. The method according to any of the preceding claims, wherein the method further comprises, after the step of actively cooling the formed composite lightweight construction (7), a step of sealing a rear side of the formed composite lightweight construction (7), for instance using a resin.

14. The method according to any of the preceding claims, wherein the method is completely automated and performed by computer-controlled robots and machines.

15. A formed composite lightweight construction (7), such as a vehicle outer surface component (2-6) configured to be attached in exterior arrangement to a vehicle (1) to withstand climate exposure, such as rain, snow, wind and/or sunlight, which composite lightweight construction (7) is produced using the method according to any of claims 1-14.
